# FASCICULE DE BREVET EUROPEEN

(11) **EP 4 655 207 B1**
(45) Date de publication et mention de la délivrance du brevet: **21.10.2026**
(21) Numéro de dépôt: 24711248.5
(22) Date de dépôt: 22.01.2024
(51) Int. Cl.: B64D 15/20

(54) **PROCÉDÉ DE DISCRIMINATION DE CONDITIONS GIVRANTES PAR APPRENTISSAGE AUTOMATIQUE**
VERFAHREN ZUR UNTERSCHEIDUNG VON VEREISUNGSBEDINGUNGEN DURCH MASCHINELLES LERNEN
PROCESS FOR DISCERNING ICING CONDITIONS THROUGH MACHINE LEARNING

(30) Priorité: 26.01.2023 FR 2300747
(43) Date de publication de la demande: 03.12.2025
(73) Titulaire: Safran Aerosystems, 78370 Plaisir (FR); SAFRAN, 75015 Paris (FR)
(72) Inventeur: COLAS, Florent, 77550 MOISSY-CRAMAYEL (FR); PORTIER, Philippe, 77550 MOISSY-CRAMAYEL (FR); SEO, Sin-Seok, 77550 MOISSY-CRAMAYEL (FR)
(74) Mandataire: Cabinet Camus Lebkiri
(86) Numéro de dépôt international: PCT/FR2024/050081
(87) Numéro de publication internationale: WO 2024/156957

(56) Documents cités:
- EP-A1- 3 517 442
- FR-A1- 3 123 426
- US-B2- 6 759 962

## Description

### DOMAINE TECHNIQUE DE L'INVENTION

Le domaine technique de l'invention est celui de l'aéronautique.

La présente invention concerne un procédé de discrimination de conditions givrantes par apprentissage automatique et en particulier par apprentissage supervisé.

### ARRIERE-PLAN TECHNOLOGIQUE DE L'INVENTION

Lorsqu'un aéronef traverse un nuage contenant des particules d'eau à l'état liquide en surfusion, ces particules vont provoquer l'accrétion d'une couche de glace sur certaine partie de l'aéronef. Afin d'éviter qu'un tel phénomène ne se produise, il est important de détecter les conditions givrantes dans un environnement autour de l'aéronef. En effet, la partie 25.1420 du document « Easy Access Rules for Large Aeroplanes (CS-25) » requiert qu'un aéronef puisse fonctionner de manière sûre dans les conditions givrantes définies par l'annexe O de la partie 25 « Part 25 » du Code de Régulation Fédérale 14 « Code of Federal Regulation 14 ». L'annexe O « Appendix O » de la partie 25 concerne la présence de gouttelettes d'eau surfondues de diamètre supérieur à 100 µm dans l'atmosphère. L'annexe C « Appendix C » de la partie 25 décrit le cas de gouttelettes d'eau surfondues dont le diamètre est inférieur ou égale à 100 micromètres dans l'atmosphère. Le diamètre moyen de telles gouttelettes d'eau surfondues est généralement de l'ordre de 10 micromètres. L'annexe D « Appendix D » de la partie 25 considère les cristaux de glace.

Pour détecter des conditions givrantes, deux types de capteurs sont principalement utilisés : les capteurs atmosphériques et les capteurs d'accrétion. Les capteurs atmosphériques détectent les conditions givrantes en détectant les gouttelettes ou cristaux dans l'atmosphère. Les capteurs d'accrétion détectent l'accrétion de givre sur une surface.

Par exemple, un capteur d'accrétion est le capteur décrit dans le document FR2970946A1, et un procédé de détection de conditions givrantes est décrit dans le document FR3074145A1. Ce capteur est capable de détecter les conditions givrantes sans les discriminer. Pour cela, le capteur mesure l'épaisseur de givre accrétée sur une cible, disposée à l'extérieur de l'aéronef. Un module laser éclaire la cible et une partie s'y réfléchit. En mesurant l'atténuation de l'intensité du rayonnement du laser, l'épaisseur du givre est calculée, car le givre absorbe une partie du rayonnement du laser. Dans FR3074145A1, le module laser comprend deux sources laser de longueur d'onde différentes, une source laser dont l'intensité est plus atténuée par l'eau solide et une autre source laser dont l'intensité est plus atténuée par l'eau liquide. Ainsi, il est possible de distinguer l'atténuation de l'intensité du rayonnement du laser induite par la présence d'eau liquide de celle induite par la présence de givre. Le document FR2008204 décrit un procédé permettant de réaliser cette discrimination, de manière temporelle. L'idée repose sur une détection des accrétions rapides induites par les grosses gouttelettes, en suivant l'évolution d'une épaisseur de givre sur le capteur. Pour cela, la bande passante de l'électronique de détection doit être augmentée de manière significative, ce qui induit des modifications matérielles. Le document EP 3 517 442 A1 propose une méthode de détection de conditions de givrage pour un aéronef comprenant une mesure des paramétrés de systèmes embarqués suivi d'une classification des conditions de givrage.

Actuellement, de nombreux autres capteurs atmosphériques ou d'accrétion existent. Le document AIR4367 « AIRCRAFT ICE DETECTORS AND ICING RATE MEASURING INSTRUMENTS » de SAE International répertorie seize grands types de capteurs reposant sur différents principes de mesure (mécanique, acoustique, thermique, optique...). Malgré la diversité de ces technologies, seules deux technologies ont démontré la capacité de discriminer les conditions de l'annexe O des autres conditions givrantes : l'interférométrie optique et la diffusion de la lumière. Ces deux technologies sont mises en œuvre par des capteurs atmosphériques qui réalisent la détection sur un petit volume, ce qui leur permet d'isoler le signal provenant de grosses gouttelettes individuelles. Pour cela, ils reposent sur des composants optoélectroniques rapides haute-fréquence et sensibles. En effet, la classification en conditions de l'annexe O dépend de la présence de grosses gouttelettes parmi les gouttelettes d'eau surfondues. Or, quelles que soient les conditions de l'annexe O rencontrées, plus les gouttelettes sont grosses, plus elles sont rares. Ainsi, un discriminateur conditions de l'annexe O/conditions de l'annexe C doit être capable de détecter quelques grosses gouttelettes dans un ensemble de petites gouttelettes beaucoup plus nombreuses. Les systèmes permettant cela sont onéreux, ce qui les rend incompatibles avec le marché actuel. De plus, il est nécessaire de pouvoir discriminer l'accrétion de givre issue d'une seule grosse gouttelette, de l'accrétion de givre provenant d'un ensemble de gouttelettes plus petites.

Il convient donc de proposer une autre approche que les approches de l'art antérieur.

### RESUME DE L'INVENTION

L'invention offre une solution aux problèmes évoqués précédemment, en permettant une discrimination de conditions givrantes entre une présence de gouttelettes d'eau surfondues de diamètre supérieur à 100 µm dans l'atmosphère et une présence de gouttelettes d'eau surfondues dont le diamètre est inférieur à 100 micromètres dans l'atmosphère, sans avoir à modifier un capteur existant et sans utiliser un capteur onéreux.

Un aspect de l'invention concerne un procédé mis en œuvre par ordinateur de discrimination de conditions givrantes dans un environnement d'un aéronef, l'aéronef embarquant un capteur d'accumulation de glace, le procédé comprenant, à chaque cycle de mesure courant d'une pluralité de cycles de mesure :
- Acquisition de données issues du capteur d'accumulation de glace pour le cycle de mesure courant,
- Classification des données acquises pour le cycle de mesure courant, par un algorithme d'apprentissage automatique, dans une classe parmi une pluralité de classes comprenant au moins :
   - une première classe représentative d'une première condition givrante de l'environnement de l'aéronef et
   - une deuxième classe représentative d'une deuxième condition givrante de l'environnement de l'aéronef

Grâce à l'invention, il est possible, en utilisant un capteur d'accrétion existant et sans modification matérielle, de réaliser une discrimination entre plusieurs types de conditions givrantes dans un environnement autour d'un aéronef. Ainsi, il n'est pas nécessaire d'utiliser un capteur de niveau de givre coûteux, qu'il soit atmosphérique ou d'accrétion. De plus, il n'est pas nécessaire de remplacer les capteurs d'accrétion d'une flotte complète d'aéronefs.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- Le procédé comprend préalablement :
   - Entraînement d'un modèle de l'algorithme d'apprentissage supervisé à partir de données d'entraînement issues du capteur d'accumulation de glace, les données d'entraînement étant annotées avec la première condition givrante dans l'environnement de l'aéronef ou avec la deuxième condition givrante dans l'environnement de l'aéronef.
- l'algorithme d'apprentissage supervisé est choisi parmi :
   - régression logistique,
   - « K plus proches voisins »,
   - arbre de décision,
   - machine à vecteur de support,
   - Random Forest,
   - AdaBoost,
   - GradientBoost,
   - XGBoost,
   - CatBoost,
   - réseau de neurones.
- la première condition givrante comprend la présence de gouttes en surfusion ayant un diamètre inférieur ou égal à 100 micromètres et la deuxième condition givrante comprend la présence de gouttes en surfusion ayant un diamètre supérieur à 100 micromètres.
- la classification des données acquises pour le cycle de mesure courant comprend l'attribution, aux données acquises pour le cycle de mesure courant, d'une valeur correspondant au diamètre moyen des gouttes comprises dans l'environnement de l'aéronef, au diamètre maximal des gouttes comprises dans l'environnement de l'aéronef ou au contenu en eau liquide des gouttes comprises dans l'environnement de l'aéronef.
- Le procédé comprend en outre une agrégation des classes de classification de chaque cycle de mesure de la pluralité de cycles de mesure et une condition givrante globale est obtenue à partir de l'agrégation des classes de classification.
- l'obtention de la condition givrante globale à partir de l'agrégation des classes de classification est réalisée par calcul d'une occurrence majoritaire d'une classe parmi la première classe et la deuxième classe de classification des classes de classification de la pluralité de cycles de mesure.
- la classification des données acquises pour le cycle de mesure courant comprend en outre l'attribution d'une probabilité d'appartenance à la classe de classification, et l'obtention de la condition givrante globale à partir de l'agrégation des classes de classification est réalisée par calcul d'une probabilité globale de chaque classe parmi la première classe et la deuxième classe de classification pour l'agrégation des classes de classification de la pluralité de cycles de mesure.
- Le procédé comprend préalablement une étape d'optimisation d'un modèle utilisé dans le procédé d'apprentissage automatique, l'optimisation comprenant une sélection de paramètres du modèle, la sélection de paramètre étant réalisée par une approche ascendante ou par une approche descendante.

Un autre aspect de l'invention concerne un produit programme d'ordinateur comprenant des instructions qui, lorsque le programme est exécuté par un ordinateur, conduisent celui-ci à mettre en œuvre le procédé selon l'invention.

Encore un autre aspect de l'invention concerne un support d'enregistrement lisible par ordinateur comprenant des instructions qui, lorsqu'elles sont exécutées par un ordinateur, conduisent celui-ci à mettre en œuvre le procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique du procédé selon l'invention,
- La figure 2 montre une représentation schématique de l'étape d'entraînement du procédé selon l'invention,
- La figure 3 montre une représentation schématique d'un exemple de capteur d'accrétion utilisé pour mettre en œuvre le procédé selon l'invention,
- La figure 4 montre une représentation schématique d'un mode de réalisation alternatif du procédé selon l'invention.

### DESCRIPTION DETAILLEE

Sauf précision contraire, un même élément apparaissant sur des figures différentes présente une référence unique.

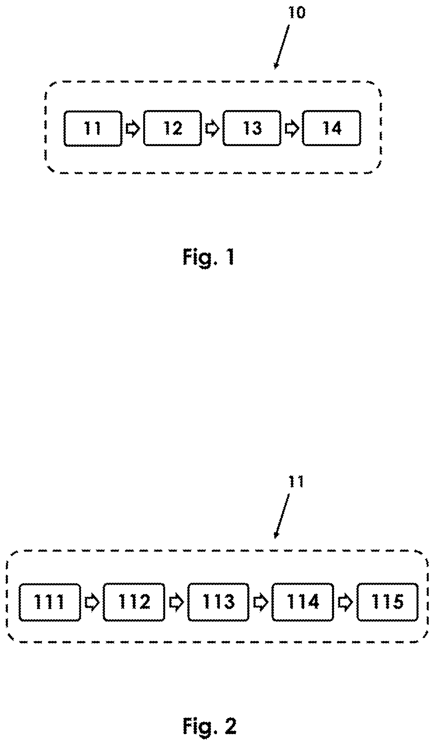

La Figure 1 montre une représentation schématique d'un procédé de discrimination de conditions givrantes selon l'invention.

Le procédé 10 permet de discriminer des conditions givrantes dans l'environnement d'un aéronef. On entend par « discriminer des conditions givrantes » le fait de différencier des conditions givrantes parmi une pluralité de classes de conditions givrantes. Ainsi, une classification de conditions givrantes d'un environnement comme appartenant à une première classe de conditions givrantes ou comme appartenant à une deuxième classe de conditions givrantes est une discrimination de conditions givrantes.

La pluralité de classe de conditions givrantes peut comprendre des classes de conditions givrantes différenciées par une taille de gouttes d'eau, par un état de gouttes d'eau, et/ou par une appartenance à une définition de conditions givrantes comprenant plusieurs paramètres.

Une taille de gouttes d'eau présentes dans l'environnement de l'aéronef est par exemple définie par un diamètre médian des gouttes d'eau, un diamètre moyen des gouttes d'eau, un diamètre maximal des gouttes d'eau surfondues parmi toutes les gouttes d'eau surfondues de l'environnement de l'aéronef, ou tout autre paramètre permettant de définir une taille des gouttes d'eau de l'environnement de l'aéronef.

Un état des gouttes d'eau présentes dans l'environnement de l'aéronef est par exemple défini par la présence d'une majorité de gouttes d'eau surfondues ou sous forme de cristaux, ou par la présence de gouttes d'eau surfondues ou sous forme de cristaux.

Une définition de conditions givrantes comprenant plusieurs paramètres est par exemple définie par les différentes annexes de la partie 25 « Part 25 » du Code de Régulation Fédérale 14 « Code of Federal Regulation 14 ». Par exemple, une première condition givrante peut être celle définie par l'annexe O « Appendix O » de la partie 25, qui comprend la présence de gouttelettes d'eau surfondues de diamètre supérieur à 100 µm dans l'environnement de l'aéronef. Par exemple, une deuxième condition givrante peut être celle définie par l'annexe C « Appendix C » de la partie 25 qui comprend la présence de gouttelettes d'eau surfondues dont le diamètre est inférieur ou égale à 100 micromètres dans l'environnement de l'aéronef. Le diamètre moyen de telles gouttelettes d'eau surfondues est généralement de l'ordre de 10 micromètres. Par exemple, une troisième condition givrante peut être celle définie par l'annexe D « Appendix D » de la partie 25 qui comprend la présence de cristaux de glace.

Ainsi, le procédé réalise une discrimination entre plusieurs conditions givrantes lorsqu'il classifie une donnée représentative d'un état de l'environnement de l'aéronef comme appartenant à une première condition givrante plutôt qu'à une deuxième condition givrante.

Le procédé 10 peut être mis en œuvre par ordinateur ou par un processeur. Préférentiellement, l'ordinateur est un microcontrôleur. Par « mis en œuvre par ordinateur », on entend que les étapes, ou au moins une étape, sont exécutées par au moins un ordinateur ou processeur ou tout autre système similaire. Ainsi, des étapes sont réalisées par le calculateur, éventuellement de manière entièrement automatique ou semi-automatique. Dans des exemples, le déclenchement d'au moins certaines des étapes du procédé peut être effectué par interaction utilisateur-ordinateur. Le niveau d'interaction utilisateur-ordinateur requis peut dépendre du niveau d'automatisme prévu et mis en balance avec la nécessité de mettre en œuvre les souhaits de l'utilisateur. Dans des exemples, ce niveau peut être défini par l'utilisateur et/ou prédéfini.

Un exemple typique de mise en œuvre par ordinateur d'un procédé consiste à exécuter le procédé avec un système adapté à cet effet. Le système peut comprendre un processeur couplé à une mémoire et une interface utilisateur graphique (« GUI »), la mémoire ayant enregistré dessus un programme informatique comprenant des instructions pour mettre en œuvre le procédé. La mémoire peut également stocker une base de données. La mémoire est tout matériel adapté pour un tel stockage, comprenant éventuellement plusieurs parties physiques distinctes.

Le procédé 10 comprend au moins quatre étapes 11 à 14. Une première étape 11 est une étape d'entraînement d'un modèle de classification. Une deuxième étape optionnelle 12 est une étape d'optimisation du modèle entraîné. Une troisième étape 13 est une étape d'acquisition de données issues d'un capteur d'accrétion de givre, et une quatrième étape 14 est une étape de classification des données acquises à partir du modèle entraîné et optionnellement optimisé.

Le procédé 10 comprend une première étape 11 d'entraînement d'un algorithme d'apprentissage automatique. Cette étape 11 comprend plusieurs sous-étapes, et est représentée schématiquement à la Figure 2. L'algorithme d'apprentissage automatique est préférentiellement supervisé, mais l'invention couvre aussi les cas où l'algorithme d'apprentissage automatique est non-supervisé. Dans un tel cas, les données ne sont pas annotées lors de l'étape d'entraînement 11.

La première étape 11 d'entraînement d'un algorithme d'apprentissage automatique comprend la création d'un modèle de classification, et le stockage de ce modèle.

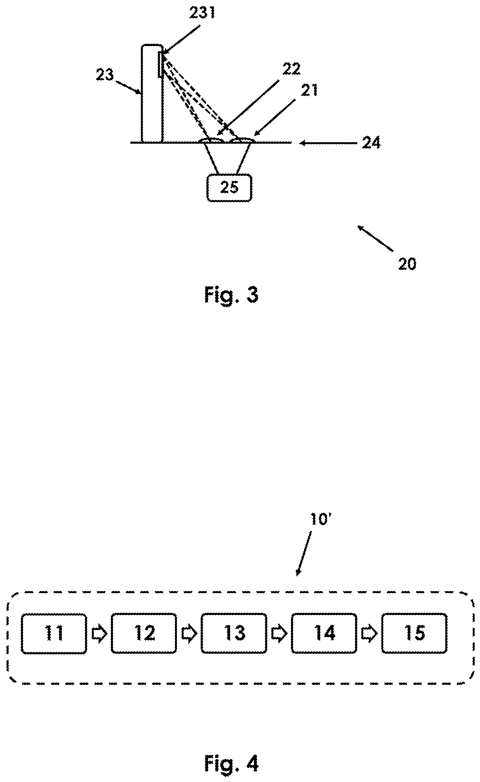

On entend par « algorithme d'apprentissage automatique » un algorithme capable d'estimer un modèle à partir de données sélectionnées en nombre fini, puis d'utiliser le modèle estimé pour réaliser une tâche en prenant en entrée des données non sélectionnées. Dans l'invention, la tâche à réaliser est la classification de données issues d'un capteur d'accrétion de givre, pour obtenir une condition givrante de l'environnement de l'aéronef. Un tel algorithme est dit « supervisé » lorsque les données sélectionnées et fournies en entrée de l'algorithme lors de la phase d'entraînement sont annotées. Dans le mode de réalisation préféré de l'invention, lors de l'étape 11 d'entraînement, des données déjà classées, c'est-à-dire annotés comme appartenant à une classe, sont fournies en entrée de l'algorithme. Les données d'entraînement sont acquises à une sous-étape 111. Les données d'entraînement ainsi que les données classées sont préférentiellement issues d'un même type de capteur d'accumulation de glace 20, représenté à la Figure 3. L'invention peut utiliser tout capteur d'accumulation de glace 20. Un capteur d'accumulation de glace peut aussi être appelé capteur d'accrétion de givre ou de glace ou capteur d'accumulation de givre.

Un exemple de capteur d'accumulation de glace 20 qui peut être utilisé pour acquérir des données utilisées dans le procédé 10 est représenté schématiquement à la Figure 3. Un tel capteur 20, ou dispositif de captation 20, est préférentiellement fixé sur une surface extérieure d'un aéronef telle qu'une aile, un empennage, un fuselage, une nacelle moteur, ou tout autre emplacement de l'aéronef. L'aéronef embarquant le capteur 20 peut être tout type d'aéronef tel qu'un avion, un hélicoptère, un drone.

En référence à la figure 3, le capteur 20 comprend un émetteur 21 configuré pour émettre un rayonnement optique, et un récepteur 22 configuré pour recevoir un rayonnement optique émis par l'émetteur 21. De plus, selon l'exemple présenté sur la figure 3, le capteur 20 comporte également une protubérance 23 comprenant une surface cible 231. La surface cible 231 est configurée pour être diffusante ou réfléchissante selon la géométrie du capteur 20. La surface cible 231 permet de renvoyer au moins une partie du rayonnement optique émis par l'émetteur 21 vers le récepteur 22. La protubérance 23 est configurée pour chauffer de manière cyclique, permettant de dégivrer la surface cible 231 à chaque cycle. La chauffe de la surface cible 231 est préférentiellement réalisée par un ou plusieurs module(s) de type Peltier.

La protubérance 23, aussi appelée sonde, présente de préférence un profil aérodynamique. Un tel profil aérodynamique est notamment défini par le comité consultatif national pour l'aéronautique généralement, également dénommé NACA, acronyme de l'anglais "National Advisory Commitee for Aeronautics".

En particulier, dans le mode de réalisation illustré sur la figure 3, la protubérance 23 présente une forme cylindrique qui s'étend perpendiculairement à une surface externe 24 de l'aéronef.

Le capteur 20 comprend en outre un processeur 25. Le processeur 25 est capable de commander la réalisation de mesures et/ou récupérer des mesures réalisées par les différents composants du capteur 20, et de créer des métriques, notamment des métriques liées à la chauffe de la surface cible 231, des métriques liées à la présence de givre sur la surface cible 231, et des métriques liées à la quantité, à l'épaisseur et à l'état du givre sur la surface cible 231. Toutes ces mesures et métriques sont des données qui peuvent être acquises à la sous-étape 111 de l'étape 11 du procédé 10.

Les données acquises à la sous-étape 111 de l'étape 11 du procédé 10 et acquises à l'étape 13 du procédé 10 sont issues du capteur 20. Par « issues du capteur 20 » on entend des données provenant directement du capteur 20 et/ou des données calculées à partir de données provenant directement du capteur 20. Ainsi, les données issues directement du capteur 20 peuvent comprendre :
- des données de tension et intensité de l'émetteur 21 en Volts,
- des données de contraste au niveau de la surface cible 231 calculées à partir du rayonnement optique reçu par le récepteur 22,
- des données de vitesse d'accrétion ou de taux d'accrétion au niveau de la surface cible 231, par exemple en centimètres par heure,
- des données de température, par exemple de température de refroidissement de la surface cible 231, et/ou de température d'une ou plusieurs faces du module Peltier qui refroidit la cible, préférentiellement de la face du module Peltier opposée à la face du module Peltier qui refroidit la cible, par exemple exprimée en degrés celsius ou Fahrenheit,
- des données de puissance de chauffe du capteur 20 en Watts, et préférentiellement de puissance de chauffe de la surface cible 231. Comme la chauffe est réalisée par des résistances, les données de puissance de chauffe comprennent une information liée à l'atmosphère et donc à l'environnement dans lequel le capteur 20 évolue, la puissance de chauffe dépendant des conditions atmosphériques pour atteindre une consigne de température.

Les données acquises peuvent en outre comprendre des données calculées à partir des données directement issues du capteur. Ces données calculées peuvent comprendre des moyennes, des régressions linéaires et/ou des technique d'ajustement de courbes (« curve fitting en anglais ») basées sur des données acquises directement du capteur 20. Durant l'étape 11 d'entraînement, le calcul de ces données est réalisé à une sous-étape 112.

Par exemple, une technique d'ajustement de courbe peut être utilisée à partir des données de tension du récepteur 22 en Volts ou des données de contraste au niveau de la surface cible 231 calculées à partir du rayonnement optique reçu par le récepteur 22. Pour cela, des modèles physiques de comportement de ces grandeurs doivent être utilisés. Par exemple, ces modèles peuvent être :
- Pour les données de tension de l'émetteur 21 *: Lₕᵢ*(*t*) *= aₕᵢ + bₕᵢe^{-c^{hi}*t}* et *Lₗₒ*(*t*) = *Lₗₒ*(*t*) *= aₗₒ + bₗₒe^{-c^{lot}*t},* avec
   - aₕᵢ, aₗₒ, bₕᵢ et bₕₒ des coefficients permettant de prendre en compte le phénomène de diffusion sur les différentes interfaces rencontrées par la lumière aux longueurs d'onde basse (lo) et haute (hi) respectivement,
   - cₗₒ et cₕᵢ des coefficients traduisant le phénomène d'absorption aux longueurs d'onde basse (lo) et haute (hi) respectivement ;
   - Plus précisément,
   - cₗₒ = 2 αₗₒ IAR/cos(θ) où αₗₒ est le coefficient d'absorption linéique de l'eau solide à la longueur d'onde lo, θ l'angle d'incidence de la lumière sur la cible et IAR la vitesse d'accrétion de la glace ou Ice Accretion Rate,
   - et,
   - cₕᵢ=2 αₕᵢ IAR/cos(θ) où αₕᵢ est le coefficient d'absorption linéique de l'eau solide à la longueur d'onde hi, θ l'angle d'incidence de la lumière sur la cible et IAR la vitesse d'accrétion de la glace ou Ice Accretion Rate.
- Pour les données de contraste au niveau de la surface cible 231 : $C = \frac{{L}_{lo} - {L}_{hi}}{{L}_{lo} + {L}_{hi}}$
- En considérant les longueurs d'onde des lasers lo à 1430nm et hi à 1550nm respectivement, αₕᵢ= 4 αₗₒ. Alors $C = \frac{a + b {e}^{- ∗ t} - a - b {e}^{- 4 ∗ c ∗ t}}{a + b {e}^{- c ∗ t} + a + b {e}^{- 4 ∗ c ∗ t}} = \frac{b \left({e}^{- c ∗ t}+{e}^{- 4 ∗ c ∗ t}\right)}{2 a + b \left({e}^{- c ∗ t}+{e}^{- 4 ∗ c ∗ t}\right)}$ avec a et b des coefficients permettant de prendre en compte le phénomène de diffusion sur les différentes interfaces rencontrées par la lumière, considérés égaux aux longueurs d'onde lo et hi,(avec les notations précédentes :a=aₗₒ=aₕᵢ et b=bₗₒ=bₕᵢ) et c un coefficient traduisant le phénomène d'absorption à la longueur d'onde lo, plus précisément, c=cₗₒ=2 αₗₒ IAR/cos(θ) où α est le coefficient d'absorption linéique de l'eau solide à la longueur d'onde lo, θ l'angle d'incidence de la lumière sur la cible et IAR la vitesse d'accrétion de la glace ou Ice Accretion Rate.

Lorsque l'algorithme d'apprentissage automatique est supervisé, les données acquises pour l'entraînement se sont vues attribuer une classe, par exemple par un opérateur, à une sous-étape 113 d'annotation. Dans l'invention, on entend par « annoter une donnée » la création d'une donnée comprenant la donnée à annoter et une étiquette (ou « label ») comprenant le nom de la classe attribuée à la donnée. Les classes ont été choisies parmi les classes représentatives d'une condition givrante, telles que décrites précédemment. Chaque donnée d'entraînement a été annotée par exemple par un opérateur ou automatiquement, comme acquise en conditions givrantes définies par l'annexe O, ou comme acquise en conditions givrantes définies par l'annexe C. D'autres exemples incluent, sans s'y limiter, des données annotées comme acquises lors de la présence dans l'environnement de l'aéronef de gouttes d'eau de diamètre moyen de 50 micromètres ou des données annotées comme acquises lors de la présence dans l'environnement de l'aéronef de cristaux de glace. Un ou plusieurs modèles physiques tel que ceux présentés au paragraphe précédent peuvent être utilisés pour proposer en entrée de l'algorithme d'apprentissage supervisé des grandeurs numériques caractéristiques de la cinétique d'accrétion de givre au niveau de la surface cible 231. Cela permet une meilleure classification par le modèle une fois entraîné, car le modèle prend alors en compte des informations dérivées des données issues directement du capteur 20, ces données n'étant pas accessibles directement depuis le capteur 20.

Lors de l'étape 11 d'entraînement, l'algorithme d'apprentissage automatique reçoit donc en entrée, à une sous-étape 114, des données, provenant d'un jeu de données d'entraînement, les données d'entraînement comprenant au moins une donnée issue du capteur 20 et un label de classe défini par exemple par un opérateur selon le formalisme expliqué précédemment. Lorsque l'algorithme d'apprentissage automatique est supervisé, les données d'entraînement reçues sont annotées.

L'algorithme d'apprentissage automatique peut être par exemple de type « Boosting de Gradient ». Le « Boosting » est une technique d'agrégation de modèles, chaque modèle ayant été créé lors d'une étape d'entraînement et le poids de chacun des modèles agrégés par le modèle final étant corrigé à chaque itération d'entraînement. Par exemple, dans le cas du Boosting d'arbres de décision, chacun des modèles est un arbre de décision « faible ». Un modèle est dit « faible » lorsque la probabilité de succès sur une prévision est légèrement supérieure à celle d'un choix aléatoire. La technique du Boosting filtre les données d'entraînement reçues : les données d'entraînement simples à traiter sont laissées aux modèles faibles déjà existants, et d'autres modèles faibles sont créés pour classifier les données d'entraînement résiduelles que les modèles existants ne savent pas traiter. A l'itération d'entraînement suivante, les données d'entraînement résiduelles de l'itération précédente ne seront plus résiduelles puisqu'un modèle faible aura été créé pour les traiter. Le modèle final agrège tous les modèles faibles. Dans le cas du Boosting d'arbres de décision, c'est un arbre de décision complexe créé à partir d'arbres de décision simples. Le poids de chacun des modèles faibles dans le modèle fort est réévalué à chaque itération de l'étape d'entraînement en fonction des performances de classement de chacun des modèles faibles.

Dans un algorithme d'apprentissage automatique, on cherche à optimiser (maximiser ou minimiser en fonction des cas) la fonction objectif (selon la dénomination anglo-saxonne « loss function »). Cette fonction compare la sortie prédite par l'algorithme à la sortie attendue (le label). Cette fonction est optimisée en jouant sur les paramètres du modèle. Dans le cas d'un algorithme de Boosting d'arbres de décision, les paramètres sont par exemple le nombre d'arbres « faibles » et leur taille, la taille de l'arbre « fort » ou encore le poids de chacun des arbres faibles au sein de l'arbre fort. Le terme « gradient » dans « Gradient Boosting » se réfère à l'utilisation d'une descente de gradient pour optimiser la fonction objectif. L'ajout d'un arbre « faible » pour traiter les données d'entraînement résiduelles doit donc suivre une descente de gradient de la fonction objectif pour l'optimiser. Si ajouter un arbre faible ne revient pas à réaliser une descente de gradient sur la fonction objectif, alors l'arbre faible n'est pas ajouté.

Une implémentation de l'algorithme de Boosting de gradient d'arbres peut être utilisée, telle que « XGBoost » pour « eXtreme Gradient Boosting » décrit dans [*« XGBoost: A Scalable Tree Boosting System », Tianqi Chen et Carlos Guestrin, arXiv:1603.02754],* « AdaBoost », ou encore « CatBoost ».

Dans des variantes, d'autres algorithmes d'apprentissage automatique peuvent être utilisés, par exemple des réseaux de neurones, des arbres de décisions simples, du « Random Forest », des Machines à Vecteurs de Support (« SVM » selon la dénomination anglo-saxonne « Support Vector Machine »), la méthode des k plus proche voisins (« KNN » selon la dénomination anglo-saxonne « k-nearest neighbors ») ou encore de la régression logistique. Le choix du modèle optimal peut être réalisé par validation croisée.

Lorsqu'un modèle a été créé, à la sous-étape 114, à partir des données d'entraînement, le modèle est sauvegardé à la sous-étape 115 pour être utilisé dans les étapes suivantes.

Le procédé 10 comprend une deuxième étape 12 d'optimisation du modèle.

L'étape 12 optionnelle d'optimisation du modèle, qui peut être réalisée pendant l'étape 11 d'entraînement du modèle, comprend une sélection des types de données d'entraînement, aussi appelées « paramètres ». Cette sélection peut être réalisée selon toute méthode de sélection de paramètres, préférentiellement selon l'un des trois modes de réalisation présentés ci-après.

Dans un premier mode de réalisation, un opérateur choisit les paramètres à utiliser. Par exemple, l'opérateur peut choisir la température au niveau de la surface cible 231 et des grandeurs physiques issues d'un modèle physique de la tension du récepteur 22.

Dans un deuxième mode de réalisation, les paramètres sont choisis via une approche ascendante, aussi appelée « forward stepwise selection ». Dans une telle approche ascendante, le modèle est d'abord entraîné à partir d'un paramètre unique parmi une pluralité de paramètres, par exemple les paramètres A, B, C et D, puis un score du modèle est calculé. Une pluralité de scores sont ainsi obtenus, c'est-à-dire un score pour chacun des paramètres A, B, C et D, et le paramètre permettant d'obtenir le meilleur score est sélectionné, par exemple le paramètre A. Un tel score peut être par exemple un ou plusieurs des scores suivants, pris seuls ou en combinaison : sensibilité, la précision, la spécificité, le F1 score. Un paramètre est ensuite ajouté et le modèle est entraîné avec deux paramètres : le premier paramètre sélectionné comme ayant permis d'obtenir le meilleur score, par exemple le paramètre A et chaque autre paramètre restant de la pluralité de paramètre, c'est-à-dire chacun des paramètres B, C et D, en combinaison avec le paramètre A. Un nouveau score du modèle est calculé pour chaque ensemble de deux paramètres comprenant le paramètre A, c'est-à-dire un score pour la combinaison des paramètres A et B, un score pour la combinaison des paramètres A et C, un score pour la combinaison des paramètres A et D. Le deuxième paramètre sélectionné en combinaison avec le premier paramètre est le paramètre, parmi les paramètres restants de la pluralité de paramètres B, C et D, permettant d'obtenir le meilleur nouveau score en combinaison avec le paramètre A, par exemple le paramètre C. Si le meilleur nouveau score obtenu avec A et C est meilleur que le score précédent obtenu avec l'unique meilleur paramètre A, par exemple car il est supérieur, le second paramètre C est conservé avec le paramètre A pour la suite de l'entraînement et pour la classification. Si le meilleur nouveau score est moins bon, aucun second paramètre ne sera utilisé pour la suite de l'entraînement ni pour la classification, et l'unique paramètre A est sélectionné. Le procédé est répété pour l'ensemble prédéfini de paramètres, en ajoutant un paramètre parmi les paramètres restants B et D à chaque étape si le meilleur nouveau score est meilleur que le score précédent. Le paramètre maintenu ajouté est celui qui, lorsqu'il est ajouté, permet d'obtenir le meilleur nouveau score. L'ensemble prédéfini de paramètres a été sélectionné par un opérateur, chaque paramètre ayant un lien avec les conditions de givre dans l'environnement de l'aéronef. L'entraînement est arrêté lorsque le score n'est plus amélioré, c'est-à-dire lorsque le meilleur score des nouveaux scores est inférieur au meilleur score des précédents scores.

Dans un troisième mode de réalisation, les paramètres sont choisis via une approche descendante, aussi appelée « backward stepwise selection ». Dans une telle approche descendante, le modèle est entraîné à partir de tous les paramètres d'un ensemble prédéfini de paramètres, par exemple A, B , C et D, puis un score du modèle est calculé. Un tel score peut être par exemple un ou plusieurs des scores suivants, pris seuls ou en combinaison : sensibilité, la précision, la spécificité, le F1 score. Un paramètre est ensuite retiré de l'ensemble de paramètres d'entraînement et le modèle est entraîné avec le nouveau sous-ensemble de paramètres. Un nouveau score du modèle est calculé. Ce retrait de paramètre est réalisé pour chaque paramètre de l'ensemble prédéfini de paramètres, permettant d'obtenir plusieurs scores. On obtient alors, pour l'exemple, quatre scores : un score pour l'ensemble A, B et C, un score pour l'ensemble A, B et D, un score pour l'ensemble A, C et D et un score pour l'ensemble B, C et D. Le meilleur score des quatre nouveaux scores, par exemple le score obtenu pour l'ensemble A, B et C est sélectionné. Si le meilleur nouveau score, c'est-à-dire le score obtenu pour l'ensemble A, B et C, est moins bon que le score précédent, c'est-à-dire que le score obtenu pour A, B, C et D, l'ensemble des paramètres d'entraînement sera utilisé pour la suite de l'entraînement et pour la classification. Si le meilleur nouveau score, c'est-à-dire le score obtenu pour l'ensemble A, B et C, est meilleur que le score précédent, c'est-à-dire que le score obtenu pour A, B, C et D, par exemple car il est supérieur au score précédent, le paramètre D, dont le retrait a permis d'obtenir le meilleur nouveau score est retiré pour la suite de l'entraînement et pour la classification. Le procédé est répété pour l'ensemble prédéfini de paramètres, c'est-à-dire en retirant un paramètre à chaque étape si le meilleur nouveau score est meilleur que le score précédent. Le paramètre maintenu retiré est celui qui, lorsqu'il est retiré, permet d'obtenir le meilleur nouveau score. L'ensemble prédéfini de paramètres a été sélectionné par un opérateur, chaque paramètre ayant un lien avec les conditions de givre dans l'environnement de l'aéronef. L'entraînement est arrêté lorsque le score n'est plus amélioré, c'est-à-dire lorsque le meilleur score des nouveaux scores est inférieur au meilleur score des précédents scores.

L'optimisation 12 du modèle peut comprendre une étape de test, durant laquelle on teste la robustesse du modèle estimé avec des données de test, provenant du même jeu de données que les données d'entraînement. Le modèle estimé se voit proposer en entrée des messages non annotés, et la prédiction du modèle est comparée avec la sortie attendue. La robustesse du modèle sera alors évaluée automatiquement et/ou par un expert métier, c'est-à-dire que le nombre de faux positifs et de faux négatifs ne devra pas dépasser un certain seuil fixé par l'expert.

A la fin de l'étape d'entraînement 11 et de l'étape optionnelle 12 d'optimisation, un modèle entraîné est stocké dans une mémoire, distante ou locale, de l'ordinateur mettant en œuvre le procédé 10, et le modèle entraîné peut être utilisé pour classifier des données du même type que les données utilisées lors de l'entraînement.

Les étapes 13 et 14 suivantes du procédé sont réitérées pour une pluralité de cycles de mesure du capteur d'accrétion 20. On définit un cycle de mesure comme un intervalle de temps prédéfini, préférentiellement prédéfini entre deux dégivrages de la surface cible 231 du capteur d'accrétion 20. Par exemple, cet intervalle de temps a une durée comprise entre 10 et 30 secondes. A chaque cycle de mesure du capteur 20, les étapes 13 et 14 sont réalisées, permettant ainsi d'obtenir à chaque cycle de mesure du capteur 20 une estimation des conditions givrantes dans l'environnement de l'aéronef.

A l'étape 13, des données issues du capteur d'accumulation de glace 20 sont acquises pour le cycle de mesure courant. Cette acquisition peut être réalisée par connexion filaire ou sans fil entre le capteur et l'ordinateur mettant en œuvre le procédé 10. L'étape 13 comprend aussi le calcul de données non issues directement du capteur 20, c'est-à-dire des données calculées à partir de données issues directement du capteur 20. Pour savoir quelles données et types de données acquérir, le procédé 10 peut comprendre l'utilisation d'un fichier de configuration indiquant les données et paramètres sélectionnés pour l'entraînement du modèle, et donc les données et paramètres que le modèle entraîné sait classifier. L'étape 13 d'acquisition des données comprend ainsi l'acquisition des mêmes types de données que les données d'entraînement du modèle utilisé pour réaliser la classification de l'étape 14.

L'étape 14 de classification des données est ensuite réalisée par l'algorithme d'apprentissage automatique précédemment entraîné en utilisant le modèle précédemment estimé à l'étape 11 et optionnellement optimisé à l'étape 12.

A chaque cycle de mesure courant parmi la pluralité de cycles de mesure durant laquelle le procédé est mis en œuvre, l'algorithme d'apprentissage automatique reçoit en entrée les données acquises à l'étape 13 pour le cycle de mesure courant, et les classifie comme appartenant à une classe parmi une pluralité de classes. La pluralité de classes comprend au moins deux classes, parmi lesquelles :
- Au moins une première classe représentative d'une première condition givrante et
- au moins une deuxième classe représentative d'une deuxième condition givrante.

A chaque cycle de mesure, toutes les données acquises à l'étape 13 sont traitées en même temps, et sont toutes utilisées pour réaliser la classification. Ainsi, à chaque cycle de mesure, on obtient un unique résultat, le résultat étant la classe dans laquelle l'ensemble de données acquis à l'étape 13 pour le cycle courant a été classé. Ainsi, à un cycle courant donné, on peut obtenir comme résultat une classe représentative de conditions givrantes définies à l'annexe O. Pour cela, les données peuvent être annotées en sortie de l'algorithme d'apprentissage supervisé avec toute étiquette représentant les conditions givrantes définies à l'annexe O, par exemple un « O ». A un autre un cycle courant donné, on peut obtenir comme résultat une classe représentative de conditions givrantes définies à l'annexe C. Pour cela, les données peuvent être annotées en sortie de l'algorithme d'apprentissage supervisé avec toute étiquette représentant les conditions givrantes définies à l'annexe C, par exemple un « C ».

La pluralité de classes de classification peut comprendre plus de deux classes, par exemple pour discriminer entre différentes tailles de gouttes d'eau surfondues présentes dans l'environnement de l'aéronef. En sortie de l'algorithme d'apprentissage supervisé, des valeurs peuvent alternativement être attribuées aux données, par exemple des valeurs de diamètre moyen des gouttes d'eau surfondues dans l'environnement de l'aéronef. Ces valeurs sont alors représentatives d'une condition givrante de l'environnement de l'aéronef. Par exemple, plutôt que de classifier en deux classes « annexe C » et « annexe O », il est possible de classifier en plus de deux classes, par exemple « Annexe C », « FZDZ<40 », « FZDZ>40 », « FZRA<40 » et « FZRA>40 », avec FZDZ de l'anglais « Freezing Drizzle » pour « bruine se congelant » et FZRA de l'anglais « Freezing Rain » pour « pluie se congelant », et le chiffre correspondant à une taille de gouttelette d'eau.

En sortie de l'algorithme d'apprentissage automatique, c'est-à-dire à la fin de la classification 14, une probabilité que les données classifiées appartiennent à la classe dans laquelle les données ont été classifiées peut-être aussi ajoutée aux données. Pour cela, l'algorithme de classification utilisé peut être choisi parmi les algorithmes de : Classification par vecteurs de support (SVC), régression logistique, classificateur par processus gaussien, Random Forest, AdaBoost, GradientBoost, Sans que cette liste ne soit limitative.

Dans un mode de réalisation représenté à la Figure 4, le procédé 10' comprend une étape supplémentaire 15 par rapport au procédé 10. Cette étape 15 est réalisée à chaque cycle de mesure, et prend en compte le résultat de classification du cycle courant et les résultats des classifications d'une pluralité de cycles de mesure précédents. Cette pluralité de cycles de mesure précédents peut comprendre un nombre prédéfini n de cycle de mesure, par exemple 15 cycles de mesure précédents.

A l'étape 15, une agrégation des résultats, donc des classes de classification de l'étape 14, est réalisée. Pour cela, l'ensemble des classes attribuées aux données lors de la classification 14 pour la pluralité de cycles précédents le cycle courant de mesure et pour le cycle courant de mesure sont agrégées, et une classe globale de classification est obtenue en sortie. Cela permet d'obtenir une condition givrante plus précise et plus fiable, sur un intervalle de temps plus long.

L'agrégation 15 peut être réalisée de plusieurs manières. Un premier mode de réalisation de l'agrégation comprend le calcul d'une grandeur statistique sur la pluralité de résultats de classification, par exemple une occurrence majoritaire. Par exemple, si, sur les 15 derniers cycles, les données acquises à l'étape 13 ont été classifiées 10 fois comme représentant des conditions givrantes définies par l'annexe O, alors la classe globale pour ces 15 cycles sera la classe représentant les conditions givrantes définies par l'annexe O. Dans ce premier mode de réalisation, dans le cas d'un nombre n prédéfini de cycles où n est un nombre pair, des règles de priorité doivent être définies. Par exemple, pour plus de précautions, en cas d'égalité, les conditions de givre les plus importantes peuvent être priorisées. Par exemple, il est possible de considérer qu'en cas d'égalité, c'est-à-dire avec un nombre n par exemple qui vaut 4 et deux prédictions « conditions givrantes de l'annexe C » et deux prédictions « conditions givrantes de l'annexe O », la classe globale choisie serait les conditions givrante définies par l'annexe O. Dans ce premier mode de réalisation, de manière alternative, lorsque la classe prédite correspond à une valeur, par exemple de diamètre de gouttes d'eau surfondues, des moyennes de valeurs peuvent être calculées. Un deuxième mode de réalisation de l'agrégation comprend l'utilisation de la probabilité attribuée à la classification par l'algorithme d'apprentissage supervisé. Dans ce deuxième mode de réalisation, les résultats sont pondérés par leur probabilité attribuée. La classe globale peut alors être la classe, parmi la pluralité de cycles d'agrégation, ayant la probabilité la plus haute, ou peut-être la classe avec le plus grand nombre d'occurrences parmi les classes de la pluralité cycles de mesure, pondérées par leur probabilité.

Le nombre n de cycles précédents agrégés avec le cycle courant est préférentiellement choisi par un opérateur. Plus n est grand, plus le temps requis par l'étape 15 est important mais plus la précision du résultat est élevée.

A titre d'exemple, le modèle entrainé pourrait être intégré dans un capteur embarqué sur un aéronef et fournir des résultats au cours du vol.

Des tests réalisés sur le procédé selon l'invention ont permis de montrer de meilleures performances avec les 8 paramètres suivants, et en utilisant, pour chaque paramètre, une moyenne, une régression linéaire, et une approximation de courbe :
- Tension du Laser de longueur d'onde basse (Lo) (V),
- Tension du Laser de longueur d'onde haute (Hi) (V),
- Contraste normalisé du Laser,
- Vitesse d'accrétion (cm/h),
- Température d'une face du module Peltier (°C),
- Température de l'autre face du module Peltier (°C),
- Puissance du module Peltier (W),
- Température à l'arrière de la protubérance 23 du capteur 20 (°C).

Les données d'entraînement comptaient pour 80% d'un jeu de données sélectionné comprenant 2941 échantillons, et les données de test comptaient pour 20% du jeu de données sélectionné. Un échantillon est un cycle de mesure selon l'invention.

Avec une validation croisée stratifiée (« stratified sampling cross validation »), et en utilisant le modèle CatBoost^{®}, le procédé selon l'invention a permis d'obtenir une précision de 99.46% ± 0.10 (13 échantillons mal classifiés sur 2941 échantillons) avec 100 itérations pour une classification entre les deux classes « annexe O » et « annexe C ».

Avec une validation croisée stratifiée avec des groupes ne se chevauchant pas, et en utilisant le modèle CatBoost^{®}, le procédé selon l'invention a permis d'obtenir une précision de 96.60% ± 0.89 (82 échantillons mal classifiés sur 2941 échantillons) avec 100 itérations pour une classification entre les deux classes « annexe O » et « annexe C ».

## Revendications

1. Procédé (10) mis en œuvre par ordinateur de discrimination de conditions givrantes dans un environnement d'un aéronef, l'aéronef embarquant un capteur d'accumulation de glace (20), le procédé (10) comprenant, à chaque cycle de mesure courant d'une pluralité de cycles de mesure :
- Acquisition (13) de données issues du capteur d'accumulation de glace (20) pour le cycle de mesure courant,
- Classification (14) des données acquises pour le cycle de mesure courant, par un algorithme d'apprentissage automatique, dans une classe parmi une pluralité de classes comprenant au moins :
∘ une première classe représentative d'une première condition givrante de l'environnement de l'aéronef et
∘ une deuxième classe représentative d'une deuxième condition givrante de l'environnement de l'aéronef.

2. Procédé (10) selon la revendication précédente comprenant préalablement :
- Entraînement (11) d'un modèle de l'algorithme d'apprentissage supervisé à partir de données d'entraînement issues du capteur d'accumulation de glace (20), les données d'entraînement étant annotées avec la première condition givrante de l'environnement de l'aéronef ou avec la deuxième condition givrante de l'environnement de l'aéronef.

3. Procédé (10) selon l'une des revendications précédentes selon lequel l'algorithme d'apprentissage supervisé est choisi parmi :
- régression logistique,
- « K plus proches voisins »,
- arbre de décision,
- machine à vecteur de support,
- Random Forest,
- AdaBoost,
- GradientBoost,
- XGBoost,
- CatBoost,
- réseau de neurones.

4. Procédé (10) selon l'une des revendications précédentes selon lequel la première condition givrante comprend la présence de gouttes en surfusion ayant un diamètre inférieur ou égal à 100 micromètres et la deuxième condition givrante comprend la présence de gouttes en surfusion ayant un diamètre supérieur à 100 micromètres.

5. Procédé (10) selon l'une des revendications précédentes selon lequel la classification des données acquises pour le cycle de mesure courant comprend l'attribution, aux données acquises pour le cycle de mesure courant, d'une valeur correspondant au diamètre moyen des gouttes comprises dans l'environnement de l'aéronef, au diamètre maximal des gouttes comprises dans l'environnement de l'aéronef ou au contenu en eau liquide des gouttes comprises dans l'environnement de l'aéronef.

6. Procédé (10) selon l'une des revendications précédentes comprenant en outre une agrégation (15) des classes de classification de chaque cycle de mesure de la pluralité de cycles de mesure et selon lequel une condition givrante globale est obtenue à partir de l'agrégation (15) des classes de classification.

7. Procédé (10) selon la revendication 6 selon lequel l'obtention de la condition givrante globale à partir de l'agrégation (15) des classes de classification est réalisée par calcul d'une occurrence majoritaire d'une classe parmi la première classe et la deuxième classe de classification des classes de classification de la pluralité de cycles de mesure.

8. Procédé (10) selon la revendication 6 selon lequel la classification (14) des données acquises pour le cycle de mesure courant comprend en outre l'attribution d'une probabilité d'appartenance à la classe de classification, et selon lequel l'obtention de la condition givrante globale à partir de l'agrégation des classes de classification est réalisée par calcul d'une probabilité globale de chaque classe parmi la première classe et la deuxième classe de classification pour l'agrégation des classes de classification de la pluralité de cycles de mesure.

9. Procédé (10) selon l'une des revendications précédentes comprenant préalablement une étape d'optimisation (12) d'un modèle utilisé dans le procédé d'apprentissage automatique, l'optimisation (12) comprenant une sélection de paramètres du modèle, la sélection de paramètre étant réalisée par une approche ascendante ou par une approche descendante.

10. Produit programme d'ordinateur comprenant des instructions qui, lorsque le programme est exécuté par un ordinateur, conduisent celui-ci à mettre en œuvre le procédé (10) selon l'une des revendications 1 à 9.

11. Support d'enregistrement lisible par ordinateur comprenant des instructions qui, lorsqu'elles sont exécutées par un ordinateur, conduisent celui-ci à mettre en œuvre le procédé (10) selon l'une des revendications 1 à 9.

## Patentansprüche

1. Computergestütztes Verfahren (10) zur Erkennung von Vereisungsbedingungen in der Umgebung eines Luftfahrzeugs, wobei das Luftfahrzeug einen Vereisungssensor (20) an Bord hat und das Verfahren (10) bei jedem aktuellen Messzyklus aus einer Vielzahl von Messzyklen Folgendes umfasst:
- Erfassung (13) von Daten aus dem Vereisungssensor (20) für den aktuellen Messzyklus,
- Klassifizierung (14) der für den aktuellen Messzyklus erfassten Daten durch einen Algorithmus des maschinellen Lernens in einer Klasse aus einer Vielzahl von Klassen, die mindestens Folgendes umfassen:
∘ eine erste Klasse, die einen ersten Vereisungszustand der Umgebung des Luftfahrzeugs repräsentiert, und
∘ eine zweite Klasse, die einen zweiten Vereisungszustand der Umgebung des Luftfahrzeugs repräsentiert.

2. Verfahren (10) nach dem vorstehenden Anspruch, das zuvor umfasst:
- Training (11) eines Modells des überwachten Lernalgorithmus anhand von Trainingsdaten, die vom Vereisungssensor (20) stammen, wobei die Trainingsdaten mit dem ersten Vereisungszustand der Umgebung des Luftfahrzeugs oder mit dem zweiten Vereisungszustand der Umgebung des Luftfahrzeugs annotiert sind.

3. Verfahren (10) nach einem der vorstehenden Ansprüche, bei dem der überwachte Lernalgorithmus ausgewählt wird aus:
- logistischer Regression,
- "K-Nearest-Neighbors",
- Entscheidungsbaum,
- Support-Vektor-Maschine,
- Random Forest,
- AdaBoost,
- GradientBoost,
- XGBoost,
- CatBoost,
- Neuronalem Netz.

4. Verfahren (10) nach einem der vorstehenden Ansprüche, bei dem der erste Vereisungszustand das Vorhandensein von unterkühlten Tröpfchen mit einem Durchmesser von höchstens 100 Mikrometern umfasst und der zweite Vereisungszustand das Vorhandensein von unterkühlten Tröpfchen mit einem Durchmesser von mehr als 100 Mikrometern umfasst.

5. Verfahren (10) nach einem der vorstehenden Ansprüche, bei dem die Klassifizierung der für den aktuellen Messzyklus erfassten Daten darin besteht, den für den aktuellen Messzyklus erfassten Daten einen Wert zuzuweisen, der dem mittleren Durchmesser der in der Umgebung des Luftfahrzeugs vorhandenen Tröpfchen, dem maximalen Durchmesser der in der Umgebung des Luftfahrzeugs vorhandenen Tröpfchen oder dem Flüssigwassergehalt der in der Umgebung des Luftfahrzeugs vorhandenen Tröpfchen entspricht.

6. Verfahren (10) nach einem der vorstehenden Ansprüche, das ferner eine Aggregation (15) der Klassifizierungsklassen jedes Messzyklus aus der Vielzahl von Messzyklen umfasst und bei dem aus der Aggregation (15) der Klassifizierungsklassen ein globaler Vereisungszustand ermittelt wird.

7. Verfahren (10) nach Anspruch 6, bei dem die Ermittlung des globalen Vereisungszustands aus der Aggregation (15) der Klassifizierungsklassen durch Berechnung eines Mehrheitsvorkommens einer Klasse unter der ersten und der zweiten Klassifizierungsklasse der Klassifizierungsklassen der mehreren Messzyklen erfolgt.

8. Verfahren (10) nach Anspruch 6, bei dem die Klassifizierung (14) der für den aktuellen Messzyklus erfassten Daten ferner die Zuordnung einer Wahrscheinlichkeit der Zugehörigkeit zur Klassifizierungsklasse umfasst, und, bei dem die Ermittlung des globalen Vereisungszustands aus der Aggregation der Klassifizierungsklassen durch Berechnung einer globalen Wahrscheinlichkeit jeder Klasse aus der ersten und der zweiten Klassifizierungsklasse für die Aggregation der Klassifizierungsklassen der mehreren Messzyklen erfolgt.

9. Verfahren (10) nach einem der vorstehenden Ansprüche, das zuvor einen Schritt zur Optimierung (12) eines im maschinellen Lernverfahren verwendeten Modells umfasst, wobei die Optimierung (12) eine Auswahl von Modellparametern umfasst und die Parameterauswahl durch einen Bottom-up-Ansatz oder durch einen Top-down-Ansatz erfolgt.

10. Computerprogrammprodukt, das Anweisungen umfasst, die, wenn das Programm von einem Computer ausgeführt wird, diesen veranlassen, das Verfahren (10) nach einem der Ansprüche 1 bis 9 durchzuführen.

11. Computerlesbares Aufzeichnungsmedium, das Anweisungen enthält, die, wenn sie von einem Computer ausgeführt werden, diesen veranlassen, das Verfahren (10) nach einem der Ansprüche 1 bis 9 durchzuführen.

## Claims

1. A computer-implemented method (10) for discriminating icing conditions in an environment of an aircraft, the aircraft embarking an ice accretion sensor (20), the method (10) comprising, at each current measurement cycle of a plurality of measurement cycles:
- Acquiring (13) data from the ice accretion sensor (20) for the current measurement cycle,
- Classifying (14) the data acquired for the current measurement cycle, by an automatic learning algorithm, into one of a plurality of classes comprising at least:
∘ a first class representative of a first icing condition in the aircraft environment and
∘ a second class representative of a second icing condition in the aircraft environment.

2. The method (10) according to the preceding claim, preliminarily comprising:
- Training (11) a model of the supervised learning algorithm from training data derived from the ice accretion sensor (20), the training data being annotated with the first icing condition in the aircraft environment or with the second icing condition in the aircraft environment.

3. The method (10) according to one of the preceding claims, wherein the supervised learning algorithm is selected from:
- logistic regression,
- "K-nearest neighbours"
- decision tree
- support vector machine,
- Random Forest,
- AdaBoost,
- GradientBoost,
- XGBoost,
- CatBoost,
- neural network.

4. The method (10) according to one of the preceding claims, wherein the first icing condition comprises the presence of supercooled drops having a diameter less than or equal to 100 micrometres and the second icing condition comprises the presence of supercooled drops having a diameter greater than 100 micrometres.

5. The method (10) according to one of the preceding claims, wherein classifying the data acquired for the current measurement cycle comprises assigning, to the data acquired for the current measurement cycle, a value corresponding to the mean diameter of drops included in the aircraft environment, to the maximum diameter of drops included in the aircraft environment or to the liquid water content of drops included in the aircraft environment.

6. The method (10) according to one of the preceding claims, further comprising aggregating (15) the classification classes of each measurement cycle of the plurality of measurement cycles and wherein an overall icing condition is obtained from aggregating (15) the classification classes.

7. The method (10) according to claim 6, wherein obtaining the overall icing condition from aggregating (15) the classification classes is performed by calculating a predominant occurrence of one class among the first classification class and the second classification class of the classification classes of the plurality of measurement cycles.

8. The method (10) according to claim 6, wherein classifying (14) the data acquired for the current measurement cycle further comprises assigning a probability of belonging to the classification class, and wherein obtaining the overall icing condition from aggregating the classification classes is performed by calculating an overall probability of each class among the first classification class and the second classification class for aggregating the classification classes of the plurality of measurement cycles.

9. The method (10) according to one of the preceding claims, preliminarily comprising a step of optimising (12) a model used in the automatic learning method, optimising (12) comprising selecting parameters of the model, the parameter selection being performed by a bottom-up approach or by a top-down approach.

10. A computer program product comprising instructions which, when the program is executed by a computer, cause the same to implement the method (10) according to one of claims 1 to 9.

11. A computer-readable recording medium comprising instructions which, when executed by a computer, cause the same to implement the method (10) according to one of claims 1 to 9.
